# EUROPEAN PATENT APPLICATION

(11) **EP 4 575 423 A1**
(43) Date of publication of application: **25.06.2025**
(21) Application number: 23219633.7
(22) Date of filing: 22.12.2023
(51) Int. Cl.: G01G 19/08, G01G 23/14

(54) **A METHOD, AN APPARATUS AND A PROGRAM CODE FOR INDICATING A RESIDUAL LOAD**

(71) Applicant: Sandvik Mining and Construction Oy, 33330 Tampere (FI)
(72) Inventor: LEHTONEN, Jarkko, 33330 Tampere (FI); KITTILÄ, Veli-Matti, 33330 Tampere (FI)
(74) Representative: Sandvik

(57) **Abstract**

There is provided a method for providing an indication of a residual load of a mining vehicle comprising a dump box, a cab and an integrated weighing system. The method comprises weighing a residual load on an unloaded dump box of the mining vehicle by the integrated weighing system and comparing a weight of the residual load to a predefined limit. The method further comprises providing the indication of the weighed residual load, in response to the weight of the residual load exceeding the predefined limit. The indication comprises at least one of: an internal indication, which is detectable on an interior of the cab, and an external indication, which is detectable on an exterior of the cab of the mining vehicle.

## Description

### TECHNICAL FIELD

The present application relates to a method, an apparatus and a program code stored on a computer readable memory for indicating a residual load of a mining vehicle.

### BACKGROUND

A mining vehicle carries a load from loading site to an unloading site. After the mining vehicle has been unloaded some material may be left on a dump box of the mining vehicle. Carrying such material back and forth reduces amount of transferrable material and causes productive losses.

### SUMMARY

Aim is to utilize an integrated weighing system of a mining vehicle to measure a residual load after unloading in order to enable a residual load level to be maintained under a predefined limit.

The present application is defined by the features of the independent claims. Some example embodiments are defined in the dependent claims.

According to a first aspect of the present application, there is provided a method for providing an indication of a residual load of a mining vehicle comprising a dump box, a cab and an integrated weighing system. The method comprises weighing a residual load on an unloaded dump box of the mining vehicle by the integrated weighing system, comparing a weight of the residual load to a predefined limit, and providing the indication of the weighed residual load, in response to the weight of the residual load exceeding the predefined limit. The indication comprises at least one of: an internal indication, which is detectable on an interior of the cab, and an external indication, which is detectable on an exterior of the cab of the mining vehicle.

The method may comprise at least one of the following: displaying at least one light pattern, displaying at at least one internal display; displaying at at least one external display; projecting using at least one projector; and activating at least one sound source.

The method may comprise offsetting the indication by one or both of: a user and a service provider of the mining vehicle. The indication may be offset only by a user and/or a service provider of the mining vehicle. The method may further comprise performing at least one of the following: an inspection of a status of the dump box, a maintenance of the dump box for removal of the residual material, and removal of the residual material from the dump box.

According to a second aspect of the present application, there is provided an apparatus for causing an indication for a residual load of a mining vehicle, comprising an integrated weighing system for weighing a residual load of an unloaded dump box of the mining vehicle. The apparatus comprises means for comparing a weight of the residual load to a predefined limit, means for activating an indication of the weighed residual load, in response to the weight of the residual load exceeded the predefined limit, wherein the means for activating the indication comprise at least one of the following: means for causing activation of an internal indication detectable on an interior of a cab of the mining vehicle, and means for causing activation of an external indication, which is detectable on an exterior of the cab of the mining vehicle.

The mining vehicle may comprise at least one of the following: at least one light source in at least one of: the interior and the exterior of the cab of the mining vehicle; at least one light source for displaying at least one light pattern in at least one of: the interior and the exterior of the cab of the mining vehicle; at least one external display for displaying the external indication; at least one internal display for displaying the internal indication; at least one projector for projecting at least one of: the internal and the external indication; at least one interface for transmitting a remote indication on the weighed residual load; and at least one activator for activating at least one sound source.

The provided indication may further include instructions to at least one of the following: an inspection of a status of the dump box, a maintenance of the dump box for removal of the residual material, and removal of the residual material from the dump box. The mining vehicle may comprises a control system configured to perform the method according to the first aspect. The apparatus may comprise a computer readable memory comprising a program code, which when executed by a processor, causes the apparatus to perform the method according to the first aspect.

According to a third aspect of the present application, there is provided a computer readable memory comprising a program code, which when executed by a processor, causes the following: receiving a weight of a residual load of an unloaded dump box from an integrated weighing system of a mining vehicle; comparing the weight of the residual load to a predefined limit; activating an indication of the weighed residual load, in response to the weight of the residual load exceeding the predefined limit; wherein the activation causing at least one of: an internal indication detectable on an interior of a cab of the mining vehicle, and an external indication, which is detectable on an exterior of the mining vehicle.

### BRIEF DESCRIPTION OF THE DRAWINGS

In the following example embodiments are discussed in more detail with reference to the attached drawings, of which:
Figure 1 illustrates, by way of an example, a mining vehicle according to an example embodiment.
Figure 2 illustrates, by way of an example, a mining vehicle according to an example embodiment.
Figures 3a and 3b illustrate, by way of an example, a display for displaying a residual load indication.
Figures 4 illustrates, by way of an example, a control system of a mining vehicle according to an example embodiment.
Figure 5 illustrates, by way of an example, a method according to an example embodiment.

Figures are presented as illustrative examples and example embodiments may not be limited solely to the illustrated parts, but modifications may be made under the scope as defined in the claims. Figures that may not fully present the present application as claimed, aim to provide better understanding on the context and relating technical field.

### DESCRIPTION OF EXAMPLE EMBODIMENTS

There is provided a residual load indication for mining vehicle comprising an integrated weighing system. The integrated weighing system is configured to weigh a residual load of a dump box, after the dump box has been unloaded. The weighing enables to detect possible residual load in the unloaded dump box. Carrying such residual load, or dead weight, takes space from the effective payload, and causes productive losses. This is avoided by making clear indications on the residual load, when the weighed residual load exceeds a predetermined limit. The indications may be presented in the interior and/or in the exterior of a cab of the mining vehicle.

A mining vehicle can be used in a mining industry, in an underground or surface mines, a quarry or an excavation site, for example. Mining vehicles may comprise load and/or haul machines, for example. The mining vehicle may be suitable for loading, transporting and unloading excavated material or other bulk material. The mining vehicle is used for transporting excavated material, which may comprise excavated or blasted rock, rock material, bulk material, soil, or alike material from a loading site to an unloading site. In this context, the term "rock" is to be understood broadly to cover also a boulder, rock material, crust and other relatively hard material.

An integrated weighing system, IWS, of a mining vehicle may be used for weighing an unloaded dump box. If weighing indicates residual load, an alarm may be displayed in an internal display for an operator of the mining vehicle. The displayed alarm may say that the dump box is not empty and remind to do zeroing for the system. Zeroing can be done by the operator after every unloading in order to set off the alarm, which may be a pop-up on the display. In such cases, the residual load has tendency to grow over time. Allowing zeroing to be done on an operator level or automatically by an IWS algorithm may lead to cases, where zeroing is done without checking the dump box visually. Accordingly, the IWS shows negative load onboard of the dump box. This may lead to carrying dead weight, reducing productive load, and may cause misinterpretation on functions using the data. Zeroing is implemented for calibrating weight of an empty dump box. If any residual weight is left and zeroing is implemented, weigh of the empty dump box may be subtracted. This may be called taring, or temporary calibration, which ignores a residual load and scales the temporary calibration accordingly. Zeroing with an empty dump box may be called permanent calibration.

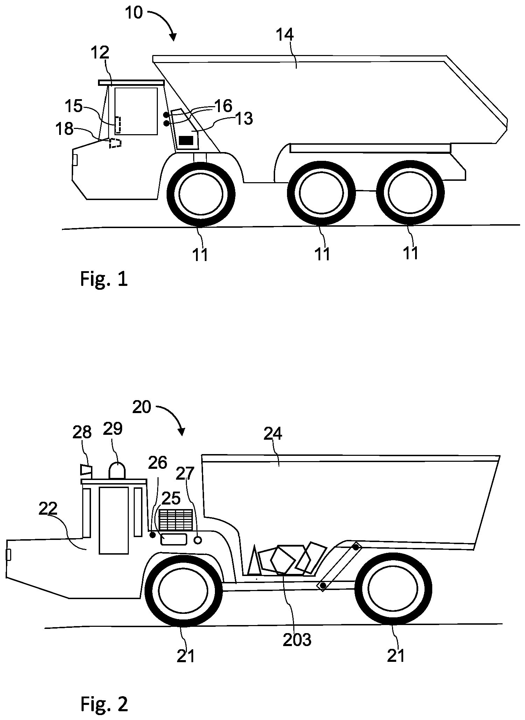

Figure 1 illustrates, by way of an example, a mining vehicle according to an example embodiment. The mining vehicle 10 comprises a motor unit 13, a cab 12 and a dump box 14. The cab 12 and the dump box 14 are connected to a frame of the mining vehicle, and the frame stands on wheels 11. The mining vehicle 10 of Fig. 1 comprises a pair of front wheels and two pairs of rear wheels. Wheels 11 comprise both drive wheels and turning wheels. The mining vehicle 10 comprises an integrated weighing system, which is configured to weigh the dump box 14 after it has been unloaded. The result of the weighed dump box 14 is compared to a predefined limit. In case the result exceeds a predetermined limit, a residual load, or a dead weight, is detected and an indication on the residual load is activated. The indication may comprise an internal indication, which is detectable on an interior of a cab of the mining vehicle, and/or an external indication, which is detectable on an exterior of the cab of the mining vehicle. The weighing, comparison and activation of an indication may be performed by a control system of the mining vehicle 10. The control system may comprise an application configured to perform weighing after unloading, comparison of the weighed value to a predefined limit, and activation of an indication. An indicator may be activated or triggered.

Fig. 1 illustrates indicators for providing a visual indication and/ or a sound indication. The mining vehicle comprising an internal display 15 located in the cab 12. An indication, a visual indication, may be displayed on the internal display 15. The indication may be displayed to the user of the mining vehicle. The display 15 may comprise a user interface for controlling the mining vehicle, or at least some functions of it. The mining vehicle 10 comprises a loudspeaker 18, which may be in the cab 12, for example a part of the user interface, or outside of the cab 12. An indication, a sound indication, maybe played via the loudspeaker 18. A sound indication may be detectable, or sensed, in the interior and/or exterior of the cab 12. The mining vehicle 10 comprises light indicators 16. The light indicators 16 are external of the cab 12 and detectable, or sensible, at least in the exterior of the cab 12. The light indicators 16 may comprise lights of different colours, for example red, yellow and green. A specific light, colour, a combination of lights, and/or a light pattern presented by the light indicators 16 may be used as an indication. Indications may be performed by two or more type of indicators and two or more indications may be displayed simultaneously.

Figure 2 illustrates, by way of an example, a mining vehicle according to an example embodiment. The mining vehicle 20 comprises a cab 22 and a dump box 24. The mining vehicle 20 comprises a power unit, a cab 22 and a dump box 24. The cab 22 and the dump box 24 are connected to a frame of the mining vehicle, and the frame stands on wheels 21. The mining vehicle 20 of Fig. 2 comprises a pair of front wheels and a pair of rear wheels. An integrated weighing system of the mining vehicle 20 is configured to weigh an unloaded dump box 24.

The result of the weighed dump box 24 is compared to a predefined limit. In case the result exceeds a predetermined limit, a residual load 203, or a dead weight, is detected and an indication on the residual load 203 is activated. The indication may comprise an internal indication, which is detectable on an interior of the cab 22 and/or an external indication, which is detectable on an exterior of the cab 22. The weighing, comparison and activation of an indication may be performed by a control system of the mining vehicle 20, which may activate or trigger an indicator.

Fig. 2 illustrates indicators for providing a visual indication and/ or a sound indication. The mining vehicle 20 comprises an external display 25. The mining vehicle 20 comprises a light indicator 26 external to the cab 22. There may be one or more light indicators 26, which may display different colours or light patterns, for example. The mining vehicle comprises a projector 27, which enables to project an indication on any desired projecting screen. An enlarged or a remote indication may be projected via the projector 27. The mining vehicle 20 comprises an external loudspeaker 28, which may play a sound indication. The sound indication may be detectable, or sensed, in the interior and/or exterior of the cab 22. The mining vehicle 20 comprises a light indicator 29 on a roof of the cab 22. An indication, a visual indication or a sound indication, may be displayed to exterior of the cab 22 using the external display 25, one or more light indicators 26, a projector 27, an external loudspeaker 28, and/or a light indicator 29. External indications, which are detectable exterior to the mining vehicle, enable to inform about residual load outside of the mining vehicle. For example, a loader of the mining vehicle is informed of a residual load, and thus able to adjust loading accordingly.

A dump box may comprise compartments instead of a regular box-like structure, for example due to structure of a mining vehicle, and maximising intake volume of the dump box. The lowest floor of the dump box is typically uneven including a compartment lower than the main floor surface. Therefore, some residual load (203 in Fig. 2) may be left to the dump box after unloading. A compact, dense soil may condense in the dump box. Also rocks of different weight, shape and volume may pushed in the dump box. When a full payload is loaded and transported on a residual load, the residual load may get further stuck in the dump box, and harder to remove. Removal of the residual load may require notching or exploding. A dump box may be damaged or broken apart during removal. Removal of the residual load may require use of forces, which may reduce lifetime of a dump box.

The indicators 25, 26, 27, 28, 29 of Fig. 2 may be used in any combination with the indicators 15, 16, 18 of the Fig. 1. Any of the indicators may be placed inside of the cab and/or outside of the cab of the mining vehicle. In addition, the mining vehicle may comprise an interface via which an indication is transmitted to a remote device. For example, a log of the mining vehicle may be updated. This enables monitoring and controlling the mining vehicle, which may be appreciated in production sensitive areas. The log information enables to collect data on indications of residual load, and to enhance processes based on the log information. For example, limit predefinition, selection of mining vehicles, maintenance intervals, and other decisions may be based at least partly on data collected on the indications.

The indicators, which are configured to indicate a residual load, are activated to display the indication in response to weight of an unloaded dump box exceeding a predefined limit. The predefined limit may be determined by a user, an owner, a maintenance, and/or a service provider of the mining vehicle. The limit may be predefined based on at least one of: a used mining vehicle, structure of a dump box, transported material, working site, or alike. This enables the user, the owner, the maintenance and/or the service provider to predefine a limit, upon which an indication of a residual load is activated. In addition, actions may be required for offsetting the one or more activated indication. The user, the owner, the maintenance and/or the service provider may be the ones, or the only ones, to be able to offset the activated indication. This avoids ignorance of the indication by other parties. For example, a driver may not just offset an indication and continue working.

Internal indications enable the user of the mining vehicle to be informed. The user may get visual information on a display or via lights, and sound indication from a loudspeaker. Displayed indication may comprise, for example, an alarm, a text, an image of a residual load, an amount of a residual load, a predefined limit. Colours or blinking lights may be used for displaying the indication. In addition, instructions for further steps may be displayed. The instructions may guide the user to arrange correcting steps to be made before continuing an ongoing work with the mining vehicle. The instructions may comprise one or more of: an inspection of a status of the dump box, a maintenance of the dump box for removal of the residual material, and removal of the residual material from the dump box. Inspection, maintenance and/or removal may be done by a third party, for example by a dedicated service provider. The indication may be offset by the dedicated party, or it may be offset in response to the instructions being performed. After at least some corrective actions have been accomplished, the weighing and comparison for a residual load may be implemented again. The indications may be offset in response to detecting no residual load based on the weighing and comparison.

External indications enable parties being external of the mining vehicle to be informed. For example, a loader of the mining vehicle is informed of a residual load. Then also the loader is aware of the situation which may lead to overloading the dump box and/or to reduced efficiency in production, for example due to carrying dead weight of the residual load, unless control of weight and/or corrective actions are made. External indications enable informing at the site, among other parties, that effectiveness of the mining vehicle is reduced due to detected residual load. This may be responded by directing the mining vehicle with the detected residual load to service /maintenance, by replacing the mining vehicle by another vehicle, by making an inspection, by informing others or by arranging another mining vehicle for the job, for example.

An example of a mining vehicle is a dumper, which may be loaded using a loading equipment or a loader comprising a bucket attached to a boom. A loader may be a wheel loader, an excavator, or comprise a silo or a conveyor belt. The mining vehicle may be automatically operated. Such mining vehicle may be an unmanned vehicle, for example remotely monitored and/or controlled from a control room, or a manned vehicle, such as a vehicle operated by an operator in a cabin of the vehicle. Mining vehicles may be configured to perform at least some tasks autonomously. For example, an automated mining loader may be configured to perform an autonomous load and haul procedure comprising loading a bucket, driving from a loading site to an unloading site, unloading the bucket, and returning from the unloading site to the loading site. Indications of the residual load may be automatically transmitted to a loader and/or detected by the loader. The loader may comprise sensors for detecting indications, and/or an interface for receiving indications on detected residual load. The loader may comprise an application for adjusting its working in response to a detected indication on the residual load. For example, the loader may stop loading before the indication is offset and/or the loader is informed accordingly.

An integrated weighing system, IWS, of a mining vehicle has capability to measure and evaluate whether a mining vehicle has residual material, so called carry back, left in its dump box after unloading. A separate detection function may be integrated to an IWS. The detection function enables informing both operators of a mining vehicle and a loader about a growing residual material load onboard. The detection function is configured to detect growing load from a zeroed load level and to activate indicators accordingly. In order to prevent an operator of the mining vehicle to just hide an alarm or a warning of a residual load on an internal display, zeroing function may be enabled only a maintenance level, after the dump box has been visually checked. Offsetting an indication may require maintenance or service level actions or personnel. The detection function is separate from a normal IWS routine. The detection function may be integrated to any kind of IWS running in a mining vehicle, to older versions and newer versions of the applications. No additional physical components may be needed for the detection function. The detection function may enable preventing mining vehicles to carry dead weight back and forth. The detection function may enable preventing just zeroing IWS, and thereby showing data on negative load onboard the dump box, causing misinterpretation on functions, which utilize the data.

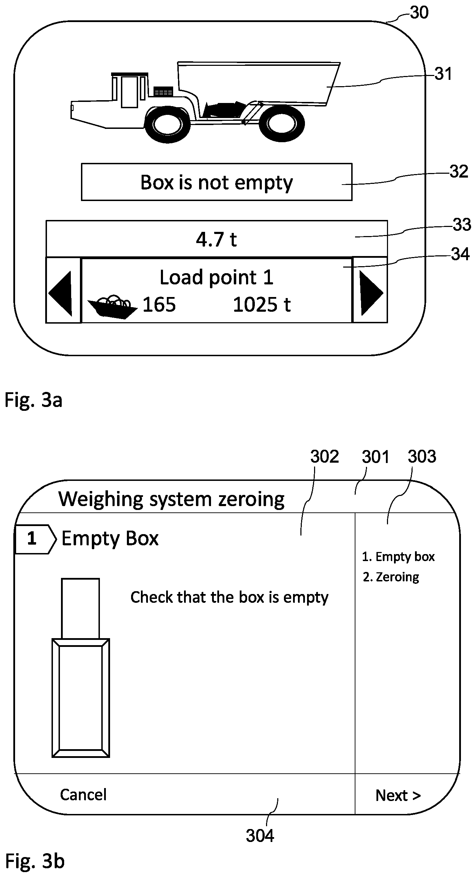

Figs. 3a and 3b illustrate, by way of an example, a display configured to indicate a residual load. Fig. 3a illustrates a screen 30 of a display showing an indication of a detected residual load. A screen 30 comprises an image 31 of a mining vehicle including residual load on its dump box. Visual presentation on a dump box indicator may be presented on a main view of the screen. A separate warning label 32 may be displayed on top of the weighing indicator. The screen 30 shows a warning label 32 comprising a written notification that the dump box is not empty. The view comprises a weighing indication 33, and information 34 on the detected weighing, for example a load point number and a predefined limit. The information 34 may include determined counters showing total amount of loads and their weight and/or the same for the specific load point. Alternatively or in addition, the display 30 may comprise information on other indications. For example, a light on an image of the mining vehicle 31 side may be blinking simultaneously with an external light indicator. Or a sound indication figure may be displayed on an image of the mining vehicle 31 simultaneously with an internal and/or external sound indicator. Blinking, colours, like yellow or red, and other features may be utilized in a display in order to get attention. For example, the weighing result may be highlighted in yellow. Fig. 3a may illustrate screen 30 of an internal display. It is possible to display the screen 30 on the internal display and on an external display. Alternatively, the external display may simultaneously display selected information, for example the warning label 32 and the weighing indication 33. In addition or alternatively, a sound and/or light indications may be played simultaneously. Sound may comprise a sound pattern, which may be synchronized with a light pattern to be played. For example, a blinking using one or more lights may be activated as an indication of a residual load exceeding a predefined limit. The mining vehicle may comprise external traffic lights for informing a loader of a loading state. An existing green light may be configured to blink in order to form an indication of a residual load.

Fig. 3b illustrates an example embodiment of a screen of a display showing a weighing system zeroing on its upper bar 301. A right bar 303 of the screen shows phases of the weighing system zeroing. A lowest bar 304 of the screen shows options to cancel and to continue to the next phase. Main screen 302 of the screen shows ongoing phase of the weighing system. The main screen 302 shows ongoing phase one, being 'Empty Box', and instructions for the phase. In Fig. 3b a top view figure of the mining vehicle is displayed with instructions to check that the box is empty. It is allowed to raise a dump box and to lower it back again in order to aid a visual check. After this the weighing and comparison may be implemented again, in order to detect whether there still exist a residual load exceeding a predefined limit or not. As the right bar 303 of the screen shows, IWS zeroing process is set as a second phase, to be done after performing the first phase of empty box. In the weigh system zeroing second phase, zeroing may be allowed to be done on maintenance or service level only. Zeroing phase may prerequisites visual check and/or emptying the dump box. Weighing system zeroing may enable to prevent the operator of the mining vehicle to just ignore an alarm of a residual load.

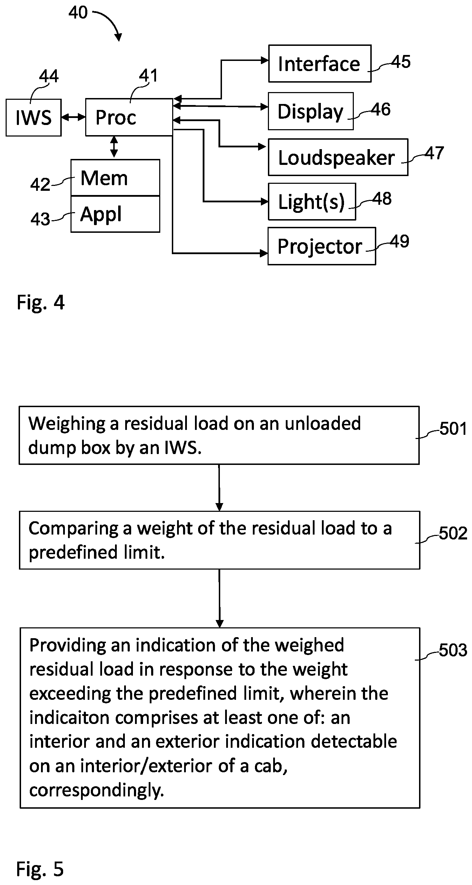

Fig. 4 illustrates, by way of an example, a control system of a mining vehicle. The control system 40 comprises a processor 41 and a memory 42, configured to control at least some functions and actuators of the mining vehicle. In some example embodiments, the control system 40 comprises an integrated weight system, IWS, 44 configured to control at least weighing an unloaded dump box of the mining vehicle. The weighing may be triggered in response to the dump box being unloaded. The unloading may be controlled by the control system 40, or by another control system of the mining vehicle. The control system 40 may comprise an application 43 configured to compare the weight of the unloaded dump box to a predefined limit, and to activate an indication upon a detection that the weight of the unloaded dump box exceeds the predefined limit. The application 43 may be a separate application stored in a memory 42, in a memory of a mining vehicle, or the application 43 may be part of the IWS 44. The application 43 may be configured to communicate with control system of the mining vehicle and with IWS, for example over an interface. The application 43 may comprise a detection function, which is configured to use an automated weighing routine of the IWS 33 and to check that an empty dump box load level stays under a predefined limit. The application 43 may be integrated to the IWS 44. The detection function may be configured to arrange an indication to be activated upon detecting an empty box load level exceeding the predefined limit. The processor 41 may be configured to activate an indication. The processor 41 may be configured to activate at least one or more indicators of: a display 46, a loudspeaker 47, one or more lights 48, a projector 49, and an interface 45. Any of the indicators may be placed inside or outside of a cab of the mining vehicle. Any of the indicators may provide an indication, which is detectable in interior and/or in exterior of the cab of the mining vehicle.

The processor 41 may comprise a single or a multi-core processor. There may be more than one processor. The processor may comprise at least application-specific integrated circuit, ASIC, and/or at least one field-programmable gate array, FPGA. The processor may be configured to perform actions at least in part by computer instructions, which may be stored in a memory 42. The memory 42 may comprise a random-access memory and/or a permanent memory. The memory 42 is at least in part accessible to the processor 41. The memory 42 may be at least in part comprised in the processor 41, and/or external to the control system 40, but accessible by it. The memory 42 may be a non-transitory computer readable medium comprising a computer program code including computer instructions that the processor 41 is configured to execute.

An integrated weighing system, IWS 44, may be integrated to the mining vehicle. The IWS 44 is configured to weigh an empty or an unloaded dump box. The IWS 44 may be based on sensing weight of the dump box at at least one measurement point in a frame of the mining vehicle, or at least one measurement point in a lift cylinder of the mining vehicle. The weight of the dump box may be realized by measuring pressure in the lift cylinders of the dump box, or by measuring a load exerted on tipping hinges of the dump box. The IWS 44 may utilize a strain gauge, or at least one load cell. The IWS 44 is an integrated part of the mining vehicle. An indication in accordance to example embodiments may be employed to any existing mining vehicle including an IWS. The controller 41 may be configured to instruct the IWS 44 to weigh a dump box after it has been unloaded. The result of the weighing may be submitted to the application 43 for comparison with a predefined limit, which may be stored in the memory 42. In response to the weigh detected to exceed the predefined limit, the processor 41 is configured to activate an indicator. The control system 40 may comprise an activator, for example a triggering circuit, which is configured to activate an indicator. Indicators are configured to display/play indications. The indicators may comprise an interface 45, via which the indication is configured to be transmitted to a remote device. The controller system 40 or the processor 41 may be configured to activate a display 46 to display a visible indication. The display may be internal or external to the cab of the mining vehicle. The controller system 40 or the processor 41 may be configured activate a loudspeaker 47 to play a sound indication. The controller system 40 or the processor 41 may be configured to activate one or more lights 48 to display a selected light or a light pattern as an indication. The controller system 40 or the processor 41 may be configured to activate a projector 49 to project a visual indication.

The mining vehicle may comprise at least one wireless data transfer unit, which may be connected to the controller system 40. The controller system 40 may be configured to control the data transfer unit to establish a data transmission connection to another (second) control system external to the mining vehicle, via an underlying wireless connection. The data transfer unit may be connected to a communications system of the worksite, such as a wireless access system comprising a wireless local area network (WLAN) and/or a cellular communications network, for example, 4G, 5G, 6G or another generation cellular network.

The control system 40 may comprise or be connected to a further network(s) and/or data processing system(s), such a worksite management system, a cloud service, a data analytics device/system, an intermediate communications network, such as the internet, etc. The system may comprise or be connected to further device(s) or control unit(s), such as a handheld user unit, a vehicle unit, a worksite management device/system, a remote control and/or monitoring device/system, data analytics device/system, sensor system/device, etc.

A control system 40 may be configured to manage at least some operations at the worksite. The control system 40 may be configured to provide a user interface for an operator to remotely monitor and, when needed, control automatic operation of the mining vehicles and/or assign work orders for a fleet of vehicles. For example, the control system 40 device may be configured to instruct a mining vehicle to repeatedly perform an autonomous loading and hauling cycle, and update and/or monitor such work order performance and status. Thus, the mining vehicle 10, 20 may be unmanned, and the user interface may be remote from the mining vehicle. The mining vehicle 10, 20 may be remotely monitored or controlled by an operator in proximity to the mining vehicle, or in control room at the worksite or even long distance away from the worksite via communications network(s).

According to an example embodiment, a computer readable memory 42 comprises a program code, which when executed by a processor 41, causes receiving a weight of a residual load of a dumped dump box from an integrated weighing system 44 of a mining vehicle. It further causes comparing the weight of the residual load to a predefined limit, and activating an indication of the weighed residual load, in response to the weight of the residual load exceeding the predefined limit. The activation causing at least one of: an internal indication detectable on an interior of a cab of the mining vehicle, and an external indication, which is detectable on an exterior of the mining vehicle.

Fig. 5 illustrates, by way of an example, a method according to an example embodiment. The method being for providing an indication of a residual load of a mining vehicle comprising a dump box, a cab and an integrated weighing system. The method comprises weighing, at a phase 501, a residual load on an unloaded dump box of the mining vehicle by the integrated weighing system. The method further comprises comparing, at a phase 502, a weight of the residual load to a predefined limit. The method comprising providing, at a phase 503, the indication of the weighed residual load, in response to the weight of the residual load exceeding the predefined limit. The indication comprises at least one of: an internal indication, which is detectable on an interior of the cab, and an external indication, which is detectable on an exterior of the cab of the mining vehicle.

A method of Fig. 5 may comprise transmitting a remote indication via an interface, optionally to a database, which is accessible by an owner, a service provider and/or a maintenance of the mining vehicle. A user may be configured to access the same or less details than the owner, the service provider and/or the maintenance of the mining vehicle. The method may comprise providing at least one of the internal and the external indication by at least one of the following: displaying at least one light pattern; displaying at at least one internal display; displaying at at least one external display; projecting using at least one projector; and activating at least one sound source. The method may comprise offsetting the indication by, or only by, at least one of: a user, an owner, a service provider, or a maintenance of the mining vehicle. Rights for offsetting, may be limited to certain parties or user levels, for example by setting access limitations. The method may further comprise performing at least one of the following: an inspection of a status of the dump box, a maintenance of the dump box for removal of the residual material, and removal of the residual material from the dump box.

A mining vehicle may include computer readable memory comprising a program code, which when executed by a processor, causes the mining vehicle to perform the method described with Fig. 5.

The previous description and figures a detection functionality is integrated to an IWS of a mining vehicle. No additional physical components may be needed. By weighing an unloaded dump box and comparing it to a predefined limit, a residual load is detected and indicated. Indications may be offset only after corrective measures have been accomplished. For example, after a dump box has been visually checked and/or emptied. This enables avoiding carrying dead weight, and at the same maintaining volume of an effective load. In addition, zeroing of a weight level of a dump box is enabled after the corrective measures, and thereby maintained at a correct level, below the predefined limit.

It is to be understood that the example embodiments of the present application disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular example embodiments only and is not intended to be limiting.

The described features, structures, or characteristics may be combined in any suitable manner in one or more example embodiments. In the previous description, numerous specific details are provided, such as examples of structures, lengths, widths, shapes, etc., to provide a thorough understanding of example embodiments of the present application. One skilled in the relevant art will recognize, however, that the present application can be practiced without one or more of the specific details, or with other methods, components, materials, etc. In other instances, well-known structures, materials, or operations are not shown or described in detail to avoid obscuring aspects of the present application.

While the forgoing examples are illustrative of the principles of the present application in one or more particular applications, it will be apparent to those of ordinary skill in the art that numerous modifications in form, usage and details of implementation can be made without the exercise of inventive faculty, and without departing from the principles and concepts of the present application. Accordingly, it is not intended that the present application be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

## Claims

1. A method for providing an indication of a residual load of a mining vehicle comprising a dump box, a cab and an integrated weighing system, the method comprising:
- weighing a residual load on an unloaded dump box of the mining vehicle by the integrated weighing system,
- comparing a weight of the residual load to a predefined limit,
- providing the indication of the weighed residual load, in response to the weight of the residual load exceeding the predefined limit,
- wherein the indication comprises at least one of: an internal indication, which is detectable on an interior of the cab, and an external indication, which is detectable on an exterior of the cab of the mining vehicle.

2. A method according to claim 1, wherein the integrated weighing system comprises at least one of:
a. at least one measurement point in a frame of the mining vehicle, .
b. at least one measurement point in a lift cylinder of the mining vehicle,
c. at least one strain gauge, and
d. at least one load cell.

3. A method according to any of the previous claims, wherein the residual load comprises a residual material maintained in the dump box after unloading the dump box.

4. A method according to any of the previous claims, wherein the indication further comprises transmitting a remote indication via an interface, optionally to a database, which is accessible by an owner of the mining vehicle.

5. A method according to any of the previous claims, wherein the predefined limit is defined by a user or a service provider of the mining vehicle.

6. A method according to any of the previous claims, wherein the indication comprises at least one or more of the following: a light indication, a light pattern indication, a sound indication, a visible indication, and a sensible indication.

7. A method according to any of the previous claims, comprising providing at least one of the internal indication and the external indication by at least one of the following:
- displaying at least one light pattern;
- displaying at at least one internal display;
- displaying at at least one external display;
- projecting using at least one projector;
- ; and
- activating at least one sound source.

8. A method according to any of the previous claims, comprising offsetting the indication by one or both of: a user and a service provider of the mining vehicle.

9. A method according to any of the previous claims, further comprising performing at least one of the following: an inspection of a status of the dump box, a maintenance of the dump box for removal of the residual material, and removal of the residual material from the dump box.

10. A method according to any of the previous claims, comprising enabling offsetting the indication in response to at least one of the following: performed inspection of a status of the dump box, maintenance of the dump box for removal of the residual material, and removal of the residual material from the dump box.

11. An apparatus for causing an indication for a residual load of a mining vehicle, comprising
- an integrated weighing system for weighing a residual load of an unloaded dump box of the mining vehicle,
- means for comparing a weight of the residual load to a predefined limit,
- means for activating an indication of the weighed residual load, in response to the weight of the residual load exceeded the predefined limit,
- wherein the means for activating the indication comprises at least one of the following: means for causing activation of an internal indication detectable on an interior of a cab of the mining vehicle, and means for causing activation of an external indication, which is detectable on an exterior of the cab of the mining vehicle.

12. An apparatus according to claim 11, wherein the mining vehicle comprises at least one of the following:
- at least one light source in at least one of: the interior and the exterior of the cab of the mining vehicle;
- at least one light source for displaying at least one light pattern in at least one of: the interior and the exterior of the cab of the mining vehicle;
- at least one external display for displaying the external indication;
- at least one internal display for displaying the internal indication;
- at least one projector for projecting at least one of: the internal and the external indication;
- at least one interface for transmitting a remote indication on the weighed residual load; and
- at least one activator for activating at least one sound source.

13. An apparatus according to any of the previous claims, 11-12, comprising means for offsetting the provided indication, which are accessible by one or both of: a user and a service provider of the mining vehicle.

14. An apparatus according to any of the previous claims 11-13, wherein the provided indication includes instructions to at least one of the following: an inspection of a status of the dump box, a maintenance of the dump box for removal of the residual material, and removal of the residual material from the dump box.

15. An apparatus according to any of the previous claims 11-14, wherein the apparatus comprises means for offsetting the provided indication in response to at least one of the following: performed inspection of a status of the dump box, maintenance of the dump box for removal of the residual material, and removal of the residual material from the dump box.

16. An apparatus according to any of the previous claims 11-15, wherein the mining vehicle comprises a control system configured to perform any one of the method according to any of claims 1-10.

17. An apparatus according to any of the previous claims 11-16, comprising a computer readable memory comprising a program code, which when executed by a processor, causes the apparatus to perform the method according to any of claims 1-10.

18. A computer readable memory comprising a program code, which when executed by a processor, causes the following:
- receiving a weight of a residual load of an unloaded dump box from an integrated weighing system of a mining vehicle,
- comparing the weight of the residual load to a predefined limit,
- activating an indication of the weighed residual load, in response to the weight of the residual load exceeding the predefined limit, the activation causing at least one of: an internal indication detectable on an interior of a cab of the mining vehicle, and an external indication, which is detectable on an exterior of the mining vehicle.
